# FASCICULE DE BREVET EUROPEEN

(11) **EP 4 100 746 B1**
(45) Date de publication et mention de la délivrance du brevet: **29.04.2026**
(21) Numéro de dépôt: 21716495.3
(22) Date de dépôt: 12.03.2021
(51) Int. Cl.: G01Q 60/60

(54) **UTILISATION DE LA MICROSCOPIE ÉLECTROCHIMIQUE À BALAYAGE COMME TECHNIQUE PRÉDICTIVE D'UN ESSAI DE CORROSION AU BROUILLARD SALIN**
VERWENDUNG VON ELEKTROCHEMISCHEN RASTERSONDENMIKROSKOPIE ALS VORHERSEHENDE TECHNIK VON SALZSPRÜHNEBELPRÜFUNG
USE OF SCANNING ELECTROCHEMICAL MICROSCOPY AS A PREDICTIVE TECHNIQUE OF A SALT SPRAY TEST

(30) Priorité: 12.03.2020 FR 2002450
(43) Date de publication de la demande: 14.12.2022
(73) Titulaire: Commissariat à l'Energie Atomique et aux Energies Alternatives, 75015 Paris (FR); Le Centre National de la Recherche Scientifique, 75794 Paris Cedex 16 (FR)
(72) Inventeur: CHARRIER, Gaëlle, 91191 GIF-SUR-YVETTE CEDEX (FR); DOUBLET, Aurélien, 91191 GIF-SUR-YVETTE CEDEX (FR); DENIAU, Guy, 91191 GIF-SUR-YVETTE CEDEX (FR); CORNUT, Renaud, 91191 GIF-SUR-YVETTE CEDEX (FR)
(74) Mandataire: Santarelli
(86) Numéro de dépôt international: PCT/FR2021/050422
(87) Numéro de publication internationale: WO 2021/181053

(56) Documents cités:
- JIANG MEI-YAN ET AL: "Silane-incorporated epoxy coatings on aluminum alloy (AA2024). Part 1: Improved corrosion performance", CORROSION SCIENCE, OXFORD, GB, vol. 92, 6 December 2014 (2014-12-06), pages 118 - 126, XP029134460, ISSN: 0010-938X, DOI: 10.1016/J.CORSCI.2014.11.046
- PENG GUANGCHUN ET AL: "Ni-Fe-MoO42- LDHs/epoxy resin varnish: A composite coating on carbon steel for long-time and active corrosion protection", PROGRESS IN ORGANIC COATINGS, ELSEVIER BV, NL, vol. 140, 3 January 2020 (2020-01-03), XP086064053, ISSN: 0300-9440, [retrieved on 20200103], DOI: 10.1016/J.PORGCOAT.2019.105514

## Description

### Domaine technique

L'invention se rapporte au domaine de l'analyse et de la caractérisation de surfaces par électrochimie.

L'invention se rapporte à l'utilisation de la microscopie électrochimique à balayage, plus simplement dénommée ci-après SECM (de « Scanning **E**lectro-**C**hemical **M**icroscopy », le même acronyme étant utilisé pour la technique et l'appareillage) comme technique prédictive d'un essai de corrosion au brouillard salin.

L'invention trouve application dans tous les secteurs d'activité dans lesquels il est recouru à des essais de corrosion au brouillard salin, qu'il s'agisse de secteurs industriels comme les secteurs de l'automobile, de l'aéronautique, de l'aérospatiale, du ferroviaire, de l'énergie éolienne, de la construction et des travaux publics, etc, de laboratoires de recherche et de développement travaillant sur les mécanismes de la corrosion ou la mise au point de revêtements anticorrosion ou encore de laboratoires spécialisés dans l'analyse et la caractérisation de matériaux.

### État de la technique antérieure

Les essais, ou tests, de corrosion au brouillard salin (neutre, acétique ou cupro-acétique), plus simplement appelés « essais au brouillard salin », sont des essais permettant d'évaluer la résistance à la corrosion de matériaux métalliques, que ce soit avec ou sans revêtement, temporaire ou permanent, de protection contre la corrosion.

Ces essais sont des incontournables des secteurs d'activité dans lesquels des pièces métalliques sont omniprésentes.

La conduite des essais au brouillard salin est décrite par différentes normes (ASTM B117-19, NF EN ISO 9227/2017, IEC 60068-2-11, etc). Dans tous les cas, les pièces dont on souhaite évaluer la résistance à la corrosion sont disposées dans une chambre d'essai dans laquelle une solution comprenant soit du chlorure de sodium (brouillard salin neutre) soit un mélange de chlorure de sodium et d'acide acétique (brouillard salin acétique) soit encore un mélange de chlorure de sodium, d'acide acétique et de chlorure de cuivre (brouillard salin cupro-acétique) est pulvérisée en continu dans des conditions de température et de pression prédéfinies, le principe étant d'exposer les pièces à un environnement corrosif contrôlé.

La résistance à la corrosion est appréciée par un suivi régulier de l'apparition de signes de corrosion, généralement sous la forme de piqûres.

Selon le type de pièce testée, la durée de ce suivi est variable et peut aller d'une à plusieurs semaines, ce qui est long à une échelle industrielle et peut être pénalisant.

Ainsi, par exemple, si des pièces en un alliage d'aluminium ayant été soumises à un traitement anticorrosion par conversion chimique, par exemple au chrome trivalent, sont testées au brouillard salin, et si un dysfonctionnement s'est produit au cours du traitement anticorrosion (telle qu'une concentration inadéquate du bain de conversion ou une durée trop courte d'immersion des pièces dans le bain de conversion) engendrant une conversion chimique non maîtrisée, on ne saura qu'à l'issue des tests au brouillard salin (soit une semaine ou plus après le début des tests) que les pièces traitées ne sont pas conformes au cahier des charges. Ces pièces ne seront donc pas commercialisables et devront être mises au rebut tout comme devront l'être aussi toutes les autres pièces ayant subi le même traitement anticorrosion pendant la durée des tests au brouillard salin. D'où une perte de temps et d'argent,

Il serait donc souhaitable de disposer d'une technique qui permette de prédire, de manière rapide mais extrêmement fiable, les résultats d'essais au brouillard salin de sorte à pouvoir corriger un éventuel dysfonctionnement dans la production de pièces métalliques ou lors de la mise en œuvre d'un traitement anticorrosion de leur surface et ce, sans avoir à attendre que ces pièces soient soumises à un essai au brouillard salin.

Or, à ce jour, aucune technique de ce type n'existe.

Ce qui existe, ce sont des protocoles prédictifs par impédance électrochimique. Cependant, l'impédance électrochimique est une technique électrochimique dont les résultats sont moyennés sur toute la surface étudiée. L'impédance mesurée caractérise donc un état moyen de surface, intégrant à la fois la contribution de zones correctement protégées et de zones plus fragiles, ce qui la rend inadaptée à l'étude de phénomènes de corrosion localisée. De plus, l'impédance électrochimique nécessite de recourir à des modèles mathématiques complexes pour traiter les données, ce qui rend difficilement envisageable une application en milieu industriel. Des méthodes par impédance localisée existent mais elles sont tout aussi compliquées à mettre en œuvre.

Ce qui existe également, c'est la méthode des droites de Tafel qui est la méthode classiquement utilisée en R&D pour évaluer le courant et le potentiel de corrosion d'un matériau métallique. Toutefois, cette méthode présente aussi un certain nombre d'inconvénients. En effet, les essais sont difficilement reproductibles, notamment dans le cas d'alliages complexes comme les alliages d'aluminium Al2024. Ils nécessitent de polariser la surface à étudier, ce qui induit une stimulation de la couche passivée qui engendre des modifications de l'état de cette surface. Dans la littérature, les surfaces à étudier sont généralement exposées à une solution saline qui permet de déclencher les phénomènes de corrosion avant de réaliser les mesures. De plus, comme dans le cas de la méthode par impédance électrochimique évoquée ci-avant, les mesures effectuées par la méthode des droites de Taffel sont moyennées sur toute la surface étudiée. Enfin, l'interprétation des courbes de polarisation obtenues et, notamment, le tracé des tangentes est une source potentielle d'erreurs supplémentaires.

Quelques rares travaux dans lesquels la SECM et des essais au brouillard salin ont été utilisés dans le cadre d'une même étude ont été publiés.

Il s'agit des travaux de :
- Jiang Mei-Yan et al. (Corrosion Science 2015, 92, 118-126, ci-après référence **[1]**) sur l'aptitude de silanes à améliorer les propriétés anticorrosion de résines époxydes sur des substrats en alliage d'aluminium 2024 ;
- Junsheng Wu et al. (Materials 2017, 10(4), 426, ci-après référence **[2]**) sur l'effet anticorrosion d'un revêtement à base d'hydroxyde de décavanadate sur des substrats en alliage d'aluminium 2024 ;
- Dongdong Peng et al. (Journal of Coatings Technology and Research 2016, 13, 837-850, ci-après référence **[3]**), sur les propriétés anticorrosion d'un revêtement à base de zirconium sur des substrats en alliage d'aluminium 6061 ;
- Yi Xiao et al. (Arabian Journal for Science and Engineering 2018, 43(7), 3577-3584, ci-après référence **[4]**) sur la résistance à la corrosion d'un revêtement en zinc modifié par des nanoparticules de silice ; et de
- Peng Guangchun et al. (Progress in Organic Coatings 2020, 140, 1-10, ci-après référence **[5]**) sur l'aptitude d'hydroxydes métalliques à renforcer les propriétés anticorrosion de vernis époxydes sur des substrats en acier au carbone.

Dans toutes ces références, les auteurs utilisent la SECM et les essais au brouillard salin comme techniques d'investigation complémentaires et non interchangeables, la SECM étant utilisée pour comprendre les mécanismes par lesquels les revêtements étudiés sont susceptibles de protéger de la corrosion tandis que les essais au brouillard salin servent, eux, à vérifier si les revêtements étudiés ont effectivement un effet anticorrosion.

Il convient d'ailleurs de noter que, dans les références **[2]** et **[5]**, ce ne sont pas les mêmes échantillons qui sont soumis aux analyses SECM et aux essais au brouillard salin, les analyses SECM étant réalisées dans les rayures d'échantillons ayant été, pour ce faire, volontairement rayés préalablement tandis que les échantillons soumis aux essais au brouillard salin sont exempts de rayures.

À aucun moment, il n'est établi dans les références **[1]** à **[5]** un quelconque lien entre la SECM et les essais au brouillard salin en dehors du fait que les résultats de ces deux techniques d'investigation peuvent contribuer à confirmer l'aptitude d'un revêtement à protéger un substrat contre la corrosion au même titre, d'ailleurs, que les résultats d'autres techniques d'investigation comme la spectroscopie par impédance électrochimique (cf. le point « 4. Discussion » de la référence **[1]**).

De plus, à aucun moment il n'est dit ou même suggéré dans les références **[1]** à **[5]** que la durée des essais au brouillard salin serait pénalisante, qu'il serait par conséquent souhaitable de pouvoir s'affranchir de la nécessité de réaliser ce type d'essais et que la SECM, qui est une technique d'analyse locale, serait susceptible d'être utilisée en lieu et place d'essais au brouillard salin qui, eux, appartiennent aux techniques d'analyse globale.

### Exposé de l'invention

L'invention vise à pallier les insuffisances de l'état de la technique en proposant d'utiliser la SECM comme technique prédictive d'un essai de corrosion au brouillard salin appliqué à une surface ayant subi un traitement anticorrosion.

En d'autres termes, la revendication 1 de l'invention propose l'utilisation de la SECM pour prédire les résultats de résistance à la corrosion qui seraient obtenus pour une surface S1 ayant subi un traitement anticorrosion si cette surface était soumise à un essai de corrosion au brouillard salin, laquelle utilisation comprend une analyse de la surface S1 par SECM.

On rappelle que la SECM est une technique de microscopie qui offre la possibilité d'examiner et d'imager une surface par électrochimie au moyen d'une sonde locale qui est une électrode miniaturisée, appelée ultramicroélectrode (ou UME), et qui balaye cette surface.

Comme précisé ci-avant, la SECM est par nature une technique d'analyse locale dont il est connu qu'elle convient à la mesure de phénomènes localisés tels que la corrosion par piqûres d'une surface de nature métallique.

Ce qui est, par contre, nouveau et totalement inattendu est que la SECM puisse aussi fournir une information représentative de la résistance à la corrosion de l'ensemble d'une surface et permet, à ce titre, de prédire avec une grande fiabilité ce que seront les résultats d'un essai au brouillard salin appliqué à cette surface.

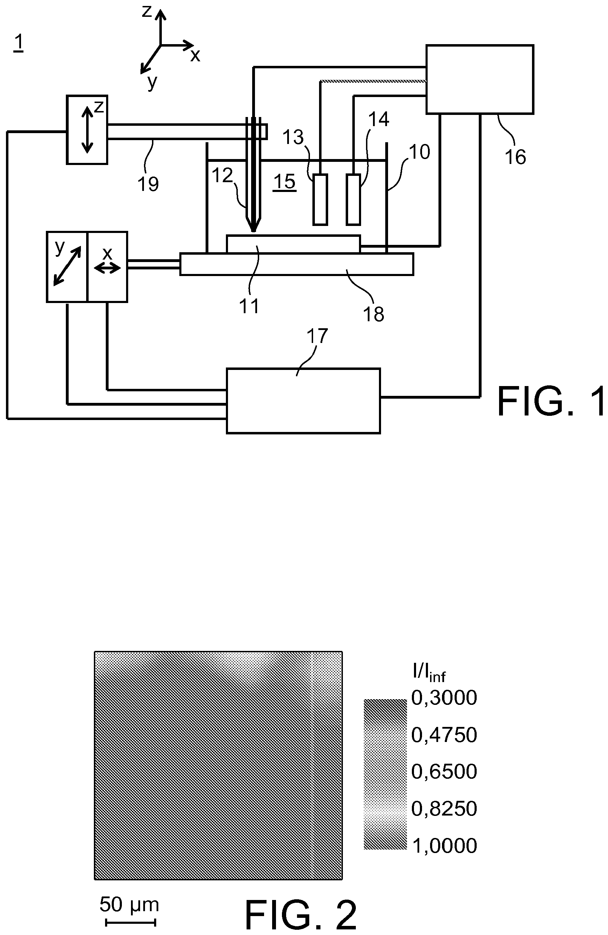

La SECM est classiquement mise en œuvre au moyen d'appareillages dont un exemple type est illustré schématiquement sur la figure 1. Comme le montre cette figure, cet appareillage, référencé 1, comprend :
- une cellule électrochimique 10 qui est prévue pour être remplie d'un électrolyte 15 dans lequel sont plongés, en conditions opératoires, la surface à analyser 11, la sonde 12, une contre-électrode 13 et éventuellement une électrode de référence 14 ;
- un potentiostat si, en conditions opératoires, un potentiel est destiné à être appliqué à la seule sonde 12 ou bien, comme montré sur la figure 1, un bipotentiostat 16 si, en conditions opératoires, un potentiel est destiné à être appliqué à la fois à la surface à analyser 11 et à la sonde 12 ;
- un système permettant de déplacer la sonde 12 et la surface à analyser 11 l'une par rapport à l'autre dans trois directions (*x, y* et *z*) et de contrôler ce déplacement ; et
- un système informatique 17 d'acquisition et de traitement des données, c'est-à-dire des courants mesurés à la sonde 12 pendant que celle-ci balaye la surface à analyser 11.

Par ailleurs, un dispositif portable de microscopie électrochimique, se présentant sous la forme d'un stylet, a récemment été développé par l'équipe de chercheurs à laquelle appartiennent les inventeurs. Ce dispositif, qui est décrit dans la demande internationale WO 2020/012097, ci-après référence **[6],** offre des performances comparables à celles des appareillages du type de celui montré sur la figure 1 tout en permettant de s'affranchir des contraintes imposées par ces appareillages et, en particulier, par les dimensions limitées de leur cellule électrochimique et par l'encombrement des éléments électriques et/ou mécaniques dont sont munis ces appareillages pour assurer et contrôler le balayage.

Dans le cadre de l'invention, la SECM est, de préférence, utilisée en mode « feedback », noté FD, aussi appelé mode régénération.

Toutefois, il va de soi que la SECM pourrait également être utilisée selon d'autres modes tels que :
- le mode compétition redox (ou RC de « **R**edox **C**ompetition »), dans lequel le substrat (i.e. la surface à analyser) et la sonde sont polarisés à un même potentiel et sont mis en concurrence pour réaliser la même réaction électrochimique ;
- le mode génération au substrat/collecte à la sonde (ou SG/TC de « **S**ubstrate **G**eneration/**T**ip Collection »), noté SG/TC, dans lequel le substrat génère une espèce électroactive qui est détectée par la sonde ; et
- le mode génération à la sonde/collecte au substrat (ou TG/SC pour « **T**ip **G**eneration/**S**ubstrate **C**ollection »), dans lequel la sonde génère une espèce électroactive qui est détectée par le substrat.

On rappelle que, dans le mode feedback, la solution électrolytique comprend à la fois un sel conférant une conductivité ionique à cette solution et un médiateur redox permettant des réactions d'oxydoréduction. La sonde est polarisée à un potentiel correspondant au plateau de diffusion du médiateur redox de sorte à induire une oxydation du médiateur redox s'il est sous forme réduite ou une réduction de ce médiateur s'il est sous forme oxydée. Loin de la surface à analyser, les espèces produites diffusent librement vers la sonde. Par contre :
- si la surface à analyser est en un matériau isolant et si la sonde est rapprochée de cette surface, la diffusion des espèces produites est gênée par la surface et le courant mesuré à la sonde diminue au fur et à mesure que la distance séparant la pointe de la sonde et la surface diminue : on parle de feedback négatif; tandis que
- si la surface à analyser est en un matériau conducteur et si la sonde est rapprochée de cette surface, la diffusion des espèces produites est également gênée mais ces espèces sont régénérées par la surface (c'est-à-dire que d'oxydées, elles reviennent à l'état réduit ou inversement) et peuvent de nouveau subir une réaction d'oxydation ou de réduction en sorte que le courant mesuré à la sonde augmente au fur et à mesure que la distance séparant la pointe de la sonde et la surface diminue : on parle de feedback positif.

Conformément à l'invention, l'analyse de la surface S1 peut, en premier lieu, comprendre un balayage de cette surface avec la sonde, la pointe de la sonde étant maintenue à une distance *d* constante de la surface S1 durant ce balayage.

Auquel cas, durant le balayage, la pointe de la sonde suit, de préférence, une trajectoire qui comprend une ou plusieurs parties rectilignes.

La trajectoire suivie par la pointe de la sonde peut ne comprendre qu'une seule partie rectiligne ; dans ce cas, on parlera, dans ce qui suit, d'analyse SECM par « linescan » (ou balayage en ligne).

En variante, la trajectoire suivie par la pointe de la sonde peut comprendre plusieurs parties rectilignes, avantageusement parallèles entre elles ; dans ce cas, on parlera, dans ce qui suit, d'analyse SECM par « cartographie ».

L'analyse de la surface S1 peut, en second lieu, comprendre un positionnement de la sonde en plusieurs points à l'aplomb de cette surface, la pointe de la sonde étant située à une distance *d* constante de la surface S1 à chaque point de positionnement.

Les points de positionnement de la sonde sont, de préférence, sélectionnés aléatoirement ; dans ce cas, on parlera, dans ce qui suit, d'analyse SECM par « statistiques ». Ce type d'analyse SECM est particulièrement avantageux en raison de la rapidité avec laquelle elle peut être effectuée.

Pour une analyse SECM par statistiques, l'utilisation d'un dispositif portable tel que décrit dans la demande internationale WO 2020/012097 est particulièrement recommandée dans la mesure où ce dispositif permet de garantir, à chaque point de positionnement, que la sonde est bien perpendiculaire à la surface à analyser et, par là même, que la distance d est bien respectée et ce, quelle que soit la configuration de la surface.

Dans le cas où l'analyse de la surface S1 comprend un balayage de cette surface avec la sonde, alors cette utilisation comprend, de préférence, au moins les étapes consistant à :
a) sélectionner un point situé à l'aplomb de la surface S1 ;
b) amener, au point sélectionné à l'étape a), la pointe de la sonde à la distance *d* ; et
c) balayer la surface S1 avec la sonde à partir du point sélectionné à l'étape a) en maintenant la pointe de la sonde à la distance *d* et mesurer le courant à la sonde durant le balayage.

Dans le cas où l'analyse de la surface S1 comprend un positionnement de la sonde en plusieurs points situés à l'aplomb de cette surface, alors cette utilisation comprend au moins les étapes consistant à :
a) sélectionner les points de positionnement de la sonde ; et
b) amener, pour chaque point de positionnement, la pointe de la sonde à la distance *d* et mesurer le courant à la sonde à chaque point de positionnement.

Dans les deux cas, la distance *d* est avantageusement déterminée préalablement par l'établissement d'une courbe d'approche.

Comme connu en soi, l'établissement d'une courbe d'approche consiste à placer la sonde à l'infini de la surface à analyser (c'est-à-dire à une distance de la surface suffisamment élevée pour que cette surface n'impacte pas la valeur du courant mesurée à la sonde) puis à rapprocher progressivement la sonde de la surface, perpendiculairement à cette surface (direction z), tout en mesurant le courant à la sonde (dont on rappelle qu'il diminue ou qu'il augmente selon le caractère isolant ou conducteur de la surface) jusqu'à ce que la pointe de la sonde arrive au contact de la surface, ce qui permet de fixer le point zéro du positionnement de la pointe de la sonde. La sonde est ensuite remontée jusqu'à amener sa pointe à la distance de la surface souhaitée pour la mesure, ou distance *d*.

Typiquement, la distance *d* est comprise entre 1/10^{ème} du diamètre de la partie conductrice de la sonde et le diamètre de cette partie conductrice. Ainsi, par exemple, pour une sonde constituée d'un fil métallique scellé dans un capillaire en verre, la distance d est typiquement comprise entre 1/10^{ème} du diamètre du fil métallique et le diamètre de ce fil, soit entre 5 µm et 50 µm si le fil métallique mesure 50 µm de diamètre.

Comme également connu en soi, le balayage de la surface S1 avec la sonde ou le positionnement de la sonde en une pluralité de points à l'aplomb de la surface S1 peut être obtenu par un déplacement dans un plan horizontal (*x, y*) :
- soit de la surface S1, la sonde étant alors immobilisée dans ce plan horizontal ;
- soit de la sonde, la surface S1 étant alors immobilisée dans ledit plan horizontal.

Quelle que soit la manière dont l'analyse de la surface S1 est réalisée (analyse par cartographie, par linescan ou par statistiques), la revendication 1 de l'invention comprend les étapes suivantes:
i) mesurer, dans des conditions opératoires préalablement choisies (distance d, composition de la solution électrolytique, potentiel électrique appliqué à la sonde, potentiel électrique appliqué à la surface S1 le cas échéant, vitesse de balayage de la sonde le cas échéant), le courant à la sonde en n₁ points différents de la surface S1 pour obtenir n₁ valeurs de courant, n₁ étant un nombre entier au moins égal à 5 ;
ii) déterminer le pourcentage des n₁ valeurs de courant obtenues à l'étape i) qui sont supérieures ou égales à un seuil de détection D, toute valeur de courant supérieure ou égale à D étant considérée comme correspondant à un point de la surface S1 susceptible d'être corrodé dans l'essai au brouillard salin ; et
iii) déterminer, à partir du pourcentage obtenu à l'étape ii), le nombre N de points de corrosion/unité de surface susceptible d'être présenté par la surface S1 si elle était soumise à l'essai au brouillard salin et comparer le nombre de points de corrosion/unité de surface ainsi obtenu avec le nombre maximal Nₘₐₓ de points de corrosion/unité de surface que devrait présenter la surface S1 pour passer avec succès l'essai au brouillard salin.

Moyennant quoi :
- si N est inférieur à Nₘₐₓ, alors il est possible de prédire que la surface S1 passera effectivement avec succès cet essai ; tandis que
- si N est supérieur à Nₘₐₓ, alors il est possible de prédire que cette surface ne passera pas avec succès cet essai.

Conformément à l'invention, D est, de préférence, préalablement déterminé en mesurant, au moyen de la sonde utilisée à l'étape i) et dans les conditions opératoires utilisées à l'étape i), le courant à la sonde en n₂ points différents d'une surface de référence S2, qui est exempte de corrosion et qui n'est pas susceptible d'être corrodée par l'essai au brouillard salin, pour obtenir n₂ valeurs de courant, n₂ étant un nombre entier au moins égal à 2, en calculant la moyenne des n₂ valeurs de courant obtenues et en choisissant une valeur de courant supérieure, par exemple de 10 %, 15 % ou 20 %, à cette moyenne, mais inférieure à la valeur la plus élevée des n₂ valeurs de courant.

Toutefois, D peut être préalablement déterminé autrement. Ainsi, par exemple :
- D peut correspondre à une valeur de courant supérieure, par exemple de 110 % ou plus, à la valeur la plus élevée des n₂ valeurs de courant mesurées pour la surface de référence S2 ; ou bien
- D peut être choisi en s'appuyant sur une valeur de courant attendue pour la sonde et les conditions opératoires utilisées à l'étape i) si cette sonde et ces conditions opératoires ont déjà été utilisées pour analyser par SECM une ou plusieurs surfaces autres que la surface S1.

La surface de référence S2 peut être une surface de même nature que la surface S1 (par exemple, dans le même matériau et ayant subi le même traitement anticorrosion) mais cela n'est pas obligatoire, l'important étant que la surface S2 ait la même rugosité que la surface S1 et ne soit ni corrodée ni susceptible de l'être par l'essai au brouillard salin. Ainsi, il peut notamment s'agir de la surface d'une éprouvette disponible commercialement ou d'une surface issue de la même ligne de fabrication que la surface S1 mais dont on aura préalablement vérifié qu'elle n'est pas susceptible d'être corrodée par l'essai au brouillard salin.

À l'étape iii), la détermination de N comprend, de préférence, une mise en corrélation de ce pourcentage avec un pourcentage P ayant été préalablement obtenu pour une surface de référence S3 ayant été soumise à la fois à une analyse par SECM et à l'essai au brouillard salin et pour laquelle :
- d'une part, le pourcentage P a été déterminé en mesurant, au moyen de la sonde utilisée à l'étape i) et dans les conditions opératoires utilisées à l'étape i), le courant à la sonde en n₃ points différents de la surface S3 pour obtenir n₃ valeurs de courant, n₃ étant un nombre entier au moins égal à 5 et en déterminant le pourcentage des n₃ valeurs supérieures à D ;
- d'autre part, il a été établi que le pourcentage P correspond à un nombre de points de corrosion/unité de surface révélés par l'essai au brouillard salin.

Ainsi, N peut notamment être déterminé en divisant le pourcentage obtenu à l'étape ii) par P et en multipliant le quotient de cette division par le nombre de points de corrosion/unité de surface révélés sur la surface S3 par l'essai au brouillard salin.

Si l'essai au brouillard salin dont on veut prédire les résultats est un essai répondant à une norme tel qu'un essai ASTM B117-19, NF EN ISO 9227/2017 ou IEC 60068-2-11, alors Nₘₐₓ est donné par cette norme.

Par ailleurs, dans le cas où l'invention est mise en œuvre pour prédire les résultats de résistance à la corrosion qui seraient obtenus pour une pluralité de surfaces si ces surfaces étaient soumises au même type d'essai au brouillard salin, alors le seuil de détection D et le pourcentage P peuvent être déterminés une fois pour toutes et servir pour l'ensemble des surfaces pour autant, bien entendu, que l'analyse par SECM desdites soit réalisée avec la même sonde et dans les mêmes conditions opératoires que celles utilisées pour déterminer ce seul de détection et ce pourcentage.

Dans ce qui précède, l'expression « courant mesuré à la sonde » désigne préférentiellement mais pas nécessairement un courant normalisé I/I_{inf}, I étant le courant mesuré à la sonde à la distance d de la surface tandis que I_{inf} est le courant mesuré à la sonde lorsque la sonde est à l'infini de la surface.

Conformément à l'invention, l'analyse de la surface S1 est, de préférence, réalisée avec un électrolyte comprenant un médiateur redox à l'état réduit.

Un tel médiateur est, par exemple, le ferrocyanure (Fe(CN)₆⁴⁻), le ferrocène (FcCp₂), le décaméthylferrocène (Me₁₀(FcCp₂)) ou le ferrocène diméthanol (Fe(MeOH)₂).

Toutefois, il va de soi qu'un électrolyte comprenant un médiateur redox à l'état oxydé est également susceptible d'être utilisé.

Comme connu en soi, l'électrolyte peut se présenter sous une forme liquide. Toutefois, si la SECM est mise en œuvre avec un dispositif portable, il peut également se présenter sous la forme d'un gel.

Lorsque l'électrolyte se présente sous une forme liquide, alors il s'agit avantageusement soit d'une solution aqueuse ou organique comprenant, en plus du médiateur redox, au moins un composé capable de s'ioniser en solution, par exemple un sel minéral ou organique, soit d'un liquide ionique.

Lorsque l'électrolyte se présente sous la forme d'un gel, alors il s'agit avantageusement d'un gel obtenu par addition d'un agent gélifiant du type gélatine, pectine, agar-agar, alginate, gomme arabique, gomme xanthane, carraghénane ou analogue, à une solution aqueuse ou organique telle que définie ci-dessus ou à un liquide ionique.

Le sel peut notamment être un sel métallique et, en particulier, un métal alcalin tel que le chlorure de sodium ou le chlorure de potassium.

L'invention comprend de nombreux avantages. En effet, elle permet de prédire de manière extrêmement fiable ce que seront les résultats d'essais au brouillard salin et ce, par des analyses :
- dont les résultats sont obtenus rapidement (de l'ordre d'1 heure pour un échantillon analysé par cartographie, de l'ordre de quelques minutes pour un échantillon analysé par linescan),
- qui peuvent être réalisées aussi bien sur des échantillons témoins de pièces que sur les pièces elles- mêmes si, par exemple, un dispositif portable tel que décrit dans la demande internationale WO 2020/012097 est utilisé,
- qui peuvent de plus être réalisées sur tous les types de matériaux dont la résistance à la corrosion est susceptible d'être analysée par des essais au brouillard salin.

D'autres caractéristiques et avantages de l'invention ressortiront du complément de description qui suit, qui se rapporte à des exemples de mise en œuvre de l'invention ayant permis de la valider.

Bien entendu, ce complément de description n'est donné qu'à titre d'illustration de l'objet de l'invention et ne constitue en aucun cas une limitation de cet objet.

### Brève description des figures

La figure 1, déjà commentée, illustre schématiquement un exemple type d'un appareillage de SECM tel qu'utilisé en laboratoire.
La figure 2 montre les résultats d'une analyse SECM par cartographie tels qu'obtenus pour un échantillon d'un alliage d'aluminium Al2024 non anodisé.
La figure 3 montre les résultats d'une analyse SECM par cartographie pour un échantillon d'un alliage d'aluminium Al2024 anodisé.
La figure 4 montre, vu de face, un échantillon d'un alliage d'aluminium Al2024 non anodisé tel qu'obtenu à l'issue d'un essai au brouillard salin neutre de 168 heures.
La figure 5 montre, vu de face, un échantillon d'un alliage d'aluminium Al2024 anodisé tel qu'obtenu à l'issue d'un essai au brouillard salin neutre de 168 heures.
La figure 6 montre les résultats d'analyses SECM par linescan tels qu'obtenus pour, d'une part, un échantillon d'un alliage d'aluminium Al2024 non anodisé (courbe 1) et, d'autre part, un échantillon d'un alliage d'aluminium Al2024 anodisé (courbe 2) ; sur cette figure, l'axe des ordonnées correspond au courant normalisé I/I_{inf} mesuré à la sonde tandis que l'axe des abscisses correspond à la distance D, exprimée en µm, parcourue en ligne par la sonde.
La figure 7 est une image prise au microscope optique d'un premier échantillon d'un alliage d'aluminium Al2024 ayant subi un traitement anticorrosion par conversion au chrome trivalent.
La figure 8 est une image prise au MEB d'un deuxième échantillon d'un alliage d'aluminium Al2024 ayant subi un traitement anticorrosion par conversion au chrome trivalent.
La figure 9 montre les trois courbes de polarisation, respectivement notées 1, 2 et 3, obtenues en soumettant un même échantillon d'un alliage d'aluminium Al2024, préalablement traité anticorrosion par conversion au chrome trivalent, à trois voltamétries cycliques successives, ainsi que les droites de Tafel tracées à partir de ces courbes ; sur cette figure, l'axe des ordonnées correspond au logarithme de la valeur absolue du courant, noté log|I|, tandis que l'axe des abscisses correspond au potentiel, noté E et exprimé en volts, appliqué à l'échantillon d'alliage d'aluminium.
La figure 10 montre, vu de face, un échantillon d'un alliage d'aluminium Al2024, préalablement traité anticorrosion par conversion au chrome trivalent, après avoir soumis cet échantillon à trois voltamétries cycliques successives.
La figure 11 montre les courbes de polarisation, respectivement 3 et 4, obtenues en soumettant deux échantillons différents d'un alliage d'aluminium Al2024, préalablement traité anticorrosion par conversion au chrome trivalent, à une voltamétrie cyclique, ainsi que les droites de Tafel tracées à partir de ces courbes ; sur cette figure, l'axe des ordonnées correspond au logarithme de la valeur absolue du courant, noté log|I|, tandis que l'axe des abscisses correspond au potentiel, noté E et exprimé en volts, appliqué à l'échantillon d'alliage d'aluminium.
La figure 12 montre les résultats de trois analyses SECM par linescan, respectivement notées 1, 2 et 3, ayant été réalisées sur une même zone d'un échantillon d'un alliage d'aluminium Al2024 préalablement traité anticorrosion par conversion au chrome trivalent ; sur cette figure, l'axe des ordonnées correspond au courant normalisé I/I_{inf} mesuré à la sonde tandis que l'axe des abscisses correspond à la distance D, exprimée en µm, parcourue par la sonde au cours de chaque analyse.
La figure 13 montre les résultats d'une analyse SECM par cartographie tels qu'obtenus pour un premier échantillon d'un alliage d'aluminium Al2024 préalablement traité anticorrosion par conversion au chrome trivalent.
La figure 14 montre les résultats d'une analyse SECM par cartographie tels qu'obtenus pour un deuxième échantillon d'un alliage d'aluminium Al2024 préalablement traité anticorrosion par conversion au chrome trivalent.
La figure 15 montre, vu de face, un premier échantillon d'un alliage d'aluminium Al2024, préalablement traité anticorrosion par conversion au chrome trivalent, tel qu'obtenu à l'issue d'un essai au brouillard salin neutre de 168 heures.
La figure 16 montre, vu de face, un deuxième échantillon d'un alliage d'aluminium Al2024, préalablement traité anticorrosion par conversion au chrome trivalent, tel qu'obtenu à l'issue d'un essai au brouillard salin neutre de 168 heures.
La figure 17 montre les résultats d'une analyse SECM par cartographie tels qu'obtenus pour un troisième échantillon d'un alliage d'aluminium Al2024, préalablement traité anticorrosion par conversion au chrome trivalent.
La figure 18 montre les résultats d'une analyse SECM par statistiques tels qu'obtenus pour un troisième échantillon d'un alliage d'aluminium Al2024, préalablement traité anticorrosion par conversion au chrome trivalent ; sur cette figure, l'axe des ordonnées correspond au nombre N d'itérations tandis que l'axe des abscisses correspond au courant normalisé I/I_{inf} mesuré à la sonde.
La figure 19 montre, vu de face, un troisième échantillon d'un alliage d'aluminium Al2024, préalablement traité anticorrosion par conversion au chrome trivalent, tel qu'obtenu à l'issue d'un essai au brouillard salin neutre de 168 heures.

### Exposé détaillé de modes de mise en œuvre particuliers

### EXEMPLE 1: Prédictions par analyses SECM par cartographie sur des échantillons de référence

Des échantillons de deux alliages d'aluminium Al2024, respectivement anodisé et non anodisé, dont la résistance à la corrosion est connue et qui peuvent donc servir de références, sont soumis à des analyses SECM par cartographie, en utilisant les conditions opératoires suivantes :
- sonde : UME constituée d'un fil de platine de 12 cm de long et de 50 µm de diamètre scellée dans un capillaire en verre ;
- électrode de référence : Ag/AgCl ;
- contre électrode : or ;
- électrolyte liquide comprenant du chlorure de potassium comme sel et du ferrocène diméthanol (Fe(MeOH)₂) à 1 mmol/L comme médiateur redox ;
- potentiel appliqué par potentiostat à la sonde : 0,6 V ;
- potentiel appliqué aux échantillons : aucun (mode OCP) ;
- distance *d* (pointe de la sonde/surface des échantillons) : 10 µm ;
- vitesse de balayage de la surface par la sonde : 10 µm/s.

L'alliage anodisé présente une couche de protection constituée d'oxyde d'aluminium, d'environ 8 µm d'épaisseur, qui lui confère une résistance à la corrosion élevée.

L'alliage non anodisé présente, lui, une résistance à la corrosion faible.

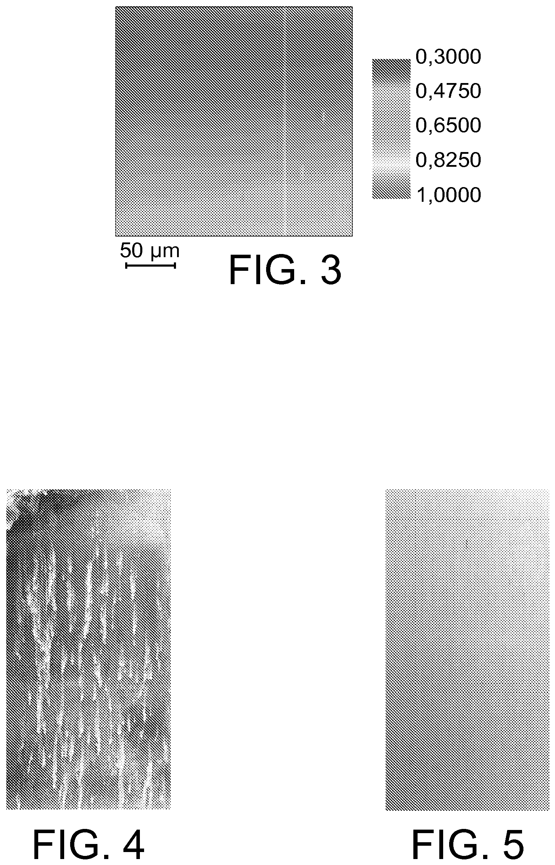

Les cartographies obtenues pour des échantillons de chacun des deux alliages sont illustrées sur les figures 2 et 3, la figure 2 correspondant à un échantillon de l'alliage non anodisé et la figure 3 correspondant à un échantillon de l'alliage anodisé. En marge de droite de chacune de ces figures, est représentée une échelle des valeurs du courant normalisé, noté I/I_{inf}, mesuré à la sonde, lequel correspond au ratio entre le courant I réellement mesuré à la sonde durant le balayage de la surface des échantillons et le courant I_{inf} mesuré à la sonde lorsque la pointe de la sonde est à l'infini de la surface des échantillons.

Comme visible sur ces figures, la cartographie obtenue pour l'échantillon d'alliage non anodisé montre que cet échantillon présente une conductivité de surface uniformément élevée (avec I/I_{inf} > 0,9) pouvant traduire une sensibilité de la surface de cet échantillon à la corrosion par piqûres, tandis que la cartographie obtenue pour l'échantillon d'alliage anodisé montre que cet échantillon présente, au contraire, une conductivité de surface uniformément faible (avec I/I_{inf} < 0,4) témoignant *a priori* de la qualité de passivation de la couche de protection que comporte cet échantillon.

Pour vérifier si ces cartographies permettent de prédire que des essais au brouillard salin révèleront que seuls les échantillons d'alliage anodisé sont conformes, des échantillons des deux types d'alliage sont soumis à des essais au brouillard salin dans les conditions suivantes :
- brouillard salin neutre (solution de NaCl) ;
- température et pression régnant dans la chambre d'essai : 35°C - 1 bar ;
- concentration en NaCl de la solution pulvérisée : 50 g/L ;
- débit d'entrée de la solution pulvérisée dans la chambre d'essai : 1,8 L/h ;
- débit de la solution pulvérisée recueillie (condensat) : 2 mL/h ;
- durée des essais : 168 heures.

Les résultats de ces essais sont présentés dans le tableau I ci-après et sur les figures 4 et 5, la figure 4 correspondant à un échantillon de l'alliage non anodisé et la figure 5 correspondant à un échantillon de l'alliage anodisé.

Il est à noter qu'un échantillon est jugé conforme s'il présente moins de 2,5 piqûres/dm² après 168 heures d'exposition au brouillard salin selon la norme NF EN ISO 9227.

**Tableau I**

| **Échantillons** | **Nombre de piqûres/dm²** | **Résultats** |
|---|---|---|
| Al2024 non anodisé | > 50 | non conforme |
| Al2024 anodisé | < 2 | conforme |

Ce tableau et ces figures montrent que les résultats des essais au brouillard salin sont en parfait accord avec les prédictions obtenues par les tests de SECM en mode cartographie, venant ainsi confirmer la possibilité d'utiliser la SECM comme technique prédictive d'essais au brouillard salin.

Il est important de noter que les résultats des essais au brouillard salin ont nécessité 7 jours d'attente alors que les analyses SECM par cartographie ont, elles, été réalisées en une seule demi-journée.

### EXEMPLE 2 : Prédictions par analyses SECM par linescan sur des échantillons de référence

Des échantillons des deux alliages d'aluminium Al2024, respectivement anodisé et non anodisé, testés dans l'exemple 1 ci-avant sont également soumis à des analyses SECM par linescan en vue de vérifier si ce mode de mise en œuvre d'une analyse SECM, qui est plus rapide que la cartographie, permet également de prédire de manière fiable les résultats d'essais au brouillard salin.

Ces analyses sont réalisées en utilisant les mêmes conditions opératoires que celles indiquées dans l'exemple 1 ci-avant.

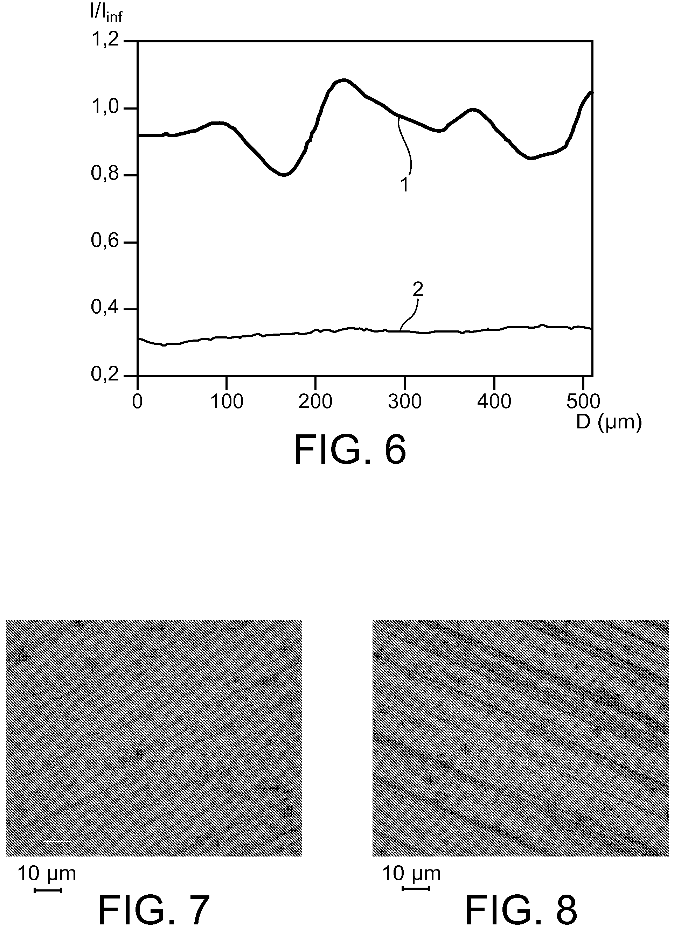

Les résultats sont montrés sur la figure 6.

Sur cette figure, la courbe 1, qui correspond à l'échantillon d'alliage non anodisé montre un feedback très élevé (avec I/I_{inf} proche de 1) témoignant de la sensibilité de la surface de cet échantillon à la corrosion. Elle révèle également des variations importantes du courant normalisé I/I_{inf}, significatives de la présence de spots de corrosion.

À l'inverse, la courbe 2, qui correspond à l'échantillon d'alliage d'aluminium anodisé, montre un feedback très faible (avec I/I_{inf} sensiblement égal à 0,3 sur toute la distance parcourue par la sonde) ainsi que l'absence de variations de la conductivité de surface.

Ces résultats sont donc en parfait accord avec les cartographies présentées dans l'exemple 1 ci-avant et démontrent que l'utilisation de la SECM par linescan permet d'obtenir des résultats prédictifs tout aussi pertinents que ceux obtenus par une SECM par cartographie.

### EXEMPLE 3 : Prédictions par analyses SECM par cartographie sur des échantillons traités anticorrosion par conversion au chrome trivalent

Afin de démontrer l'intérêt industriel de l'invention, une série d'analyses (MEB, droites de Tafel, essais au brouillard salin, analyses SECM) est réalisée non pas sur des échantillons de référence comme dans les exemples 1 et 2 ci-avant mais sur deux séries d'échantillons d'alliages d'aluminium Al2024 - dénommées séries 3 et 4 ci-après - ayant été traités contre la corrosion par conversion au Cr^{III}.

En effet, ce type de traitement anticorrosion étant encore, à ce jour, moins bien maîtrisé que les anodisations, il conduit à des pièces dont la résistance à la corrosion est variable d'un lot de pièces traitées à l'autre en sorte que des essais au brouillard salin sont encore actuellement indispensables pour vérifier si ces pièces sont conformes.

### 3.1 Traitement anticorrosion par conversion au Cr^{III}

Le traitement anticorrosion par conversion au Cr^{III} s'effectue en trois étapes :
- une première étape qui consiste à immerger pendant 5 minutes les échantillons d'alliage dans un bain comprenant 40 % volumiques de Socosurf^{™} 1858, 10 % volumiques de Socosurf^{™} 1806 et 50 % d'eau déminéralisée, ce bain étant maintenu à 50°C sous agitation, puis à rincer les échantillons à l'eau distillée ;
- une deuxième étape qui consiste à immerger pendant 10 minutes les échantillons d'alliage dans un bain comprenant 35 % volumiques de Socosurf^{™} TCS et 65 % volumiques d'eau déminéralisée, ce bain étant maintenu à 40°C sous agitation, puis à rincer les échantillons à l'eau déminéralisée ; et
- une troisième étape qui consiste à immerger pendant 5 minutes les échantillons d'alliage dans un bain comprenant 10 % volumiques de Socosurf^{™} PACS, 6 % volumiques de peroxyde d'hydrogène (H₂O₂) à 35 % et 8 % volumiques d'eau déminéralisée, ce bain étant maintenu à température ambiante sous agitation, puis à rincer les échantillons à l'eau déminéralisée et, enfin, à les sécher à l'air comprimé.

À l'issue de ce traitement, tous les échantillons présentent en principe une couche de protection principalement constituée d'oxydes de chrome et de zirconium, d'environ 200 nm d'épaisseur.

### 3.2 Analyse des échantillons par microscopie optique

Comme le montrent les figures 7 et 8, qui correspondent à des images de la surface d'un échantillon de la série 3 (figure 7) et de la surface d'un échantillon de la série 4 (figure 8), aucune différence entre les surfaces des deux échantillons n'est décelable par microscopie optique. Les couches anticorrosion des deux échantillons apparaissent avoir des morphologies similaires.

### 3.3 Méthode des droites de Tafel

Des voltamétries cycliques sont réalisées sur des échantillons appartenant aux séries 3 et 4 afin de tracer et d'exploiter les droites de Tafel puisque cette méthode de caractérisation est régulièrement utilisée en R&D pour évaluer le courant et le potentiel de corrosion d'un matériau métallique.

Ces voltamétries sont réalisées en utilisant les conditions opératoires suivantes :
- électrode de travail: échantillon d'alliage d'aluminium Al2024 traité anticorrosion par conversion au Cr^{III} ;
- électrode de référence : Ag/AgCl ;
- contre-électrode : or ;
- électrolyte : KCl 0,1mol/L ;
- vitesse de balayage : 10 mV/s.

### * Voltamétries cycliques successives sur un même échantillon de la série 4

Trois voltamétries cycliques sont réalisées successivement sur un même échantillon de la série 4.

Les courbes de polarisation log |I| = f(E) ainsi que les droites de Tafel sont ensuite tracées.

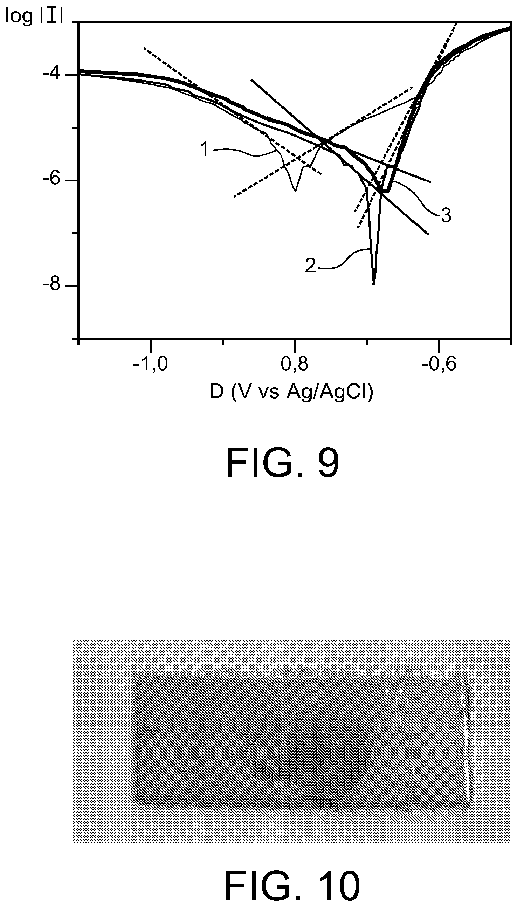

Les résultats sont montrés sur la figure 9 dans laquelle les courbes 1, 2 et 3 correspondent respectivement aux premier, deuxième et troisième cycles.

Comme le montre cette figure, des résultats très différents sont obtenus d'un cycle à l'autre, ce qui met en évidence une évolution de la surface de l'échantillon en cours de manipulation. La couche passivée est stimulée pendant la mesure par la polarisation de l'échantillon, ce qui engendre des modifications de son état de surface.

Ces modifications sont d'ailleurs visibles à l'œil nu, comme le montre la figure 10, qui est une photographie de la surface de l'échantillon prise à l'issue du troisième cycle de voltamétrie et sur laquelle une zone noircie est visible à l'endroit précis où la mesure a été effectuée.

### * Voltamétries cycliques sur des échantillons des séries 3 et 4

Une voltamétrie cyclique est réalisée sur un échantillon de chacune des séries 3 et 4 dans l'objectif de vérifier si la méthode des droites de Tafel permet de différencier la résistance à la corrosion des couches de protection de ces échantillons.

Là également, les courbes de polarisation log |I| = f(E) et les droites de Tafel sont ensuite tracées.

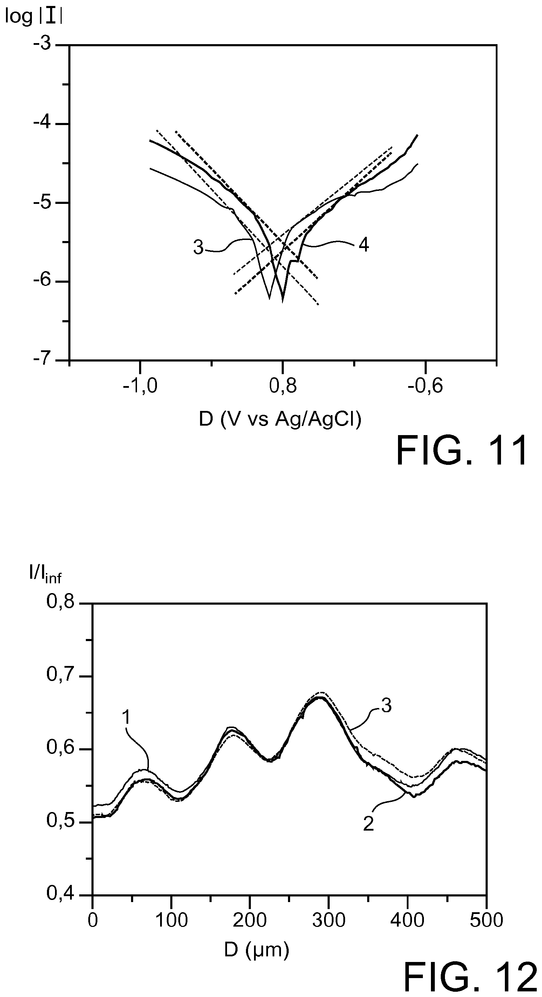

Les résultats sont montrés sur la figure 11 dans laquelle les courbes sont respectivement notées 3 et 4 en fonction de la série à laquelle appartient l'échantillon.

Comme le montre cette figure, des résultats très similaires sont obtenus sur les deux échantillons (potentiel et courant de corrosion très proches).

Or, comme mis en évidence au point 3.5 ci-après, des essais au brouillard salin de ces deux échantillons conduisent à des résultats très différents. Ceci met en évidence que l'exploitation des droites de Tafel *via* une voltamétrie cyclique n'est pas une méthode adéquate pour différencier deux échantillons ayant subi le même type de traitement anticorrosion mais présentant néanmoins des résistances à la corrosion différentes.

### 3.4 Analyses SECM

### * Analyses SECM par linescan sur un même échantillon de la série 4

Un échantillon de la série 4 est soumis à trois analyses SECM successives par linescan, les trois analyses étant réalisées sur une même zone de l'échantillon et en utilisant les mêmes conditions opératoires que celles décrites dans l'exemple 1.

Les résultats sont montrés sur la figure 12 dans laquelle les courbes 1, 2 et 3 correspondent respectivement aux premier, deuxième et troisième balayages de la zone de l'échantillon par la sonde.

Comme le montre cette figure, les courbes 1, 2 et 3 sont quasiment identiques, ce qui signifie qu'une analyse SECM n'induit aucune altération de la surface de l'échantillon.

### * Analyses SECM par cartographie sur des échantillons des séries 3 et 4

Des analyses SECM par cartographie sont réalisées sur des échantillons appartenant aux séries 3 et 4 en utilisant les mêmes conditions opératoires que celles décrites dans l'exemple 1.

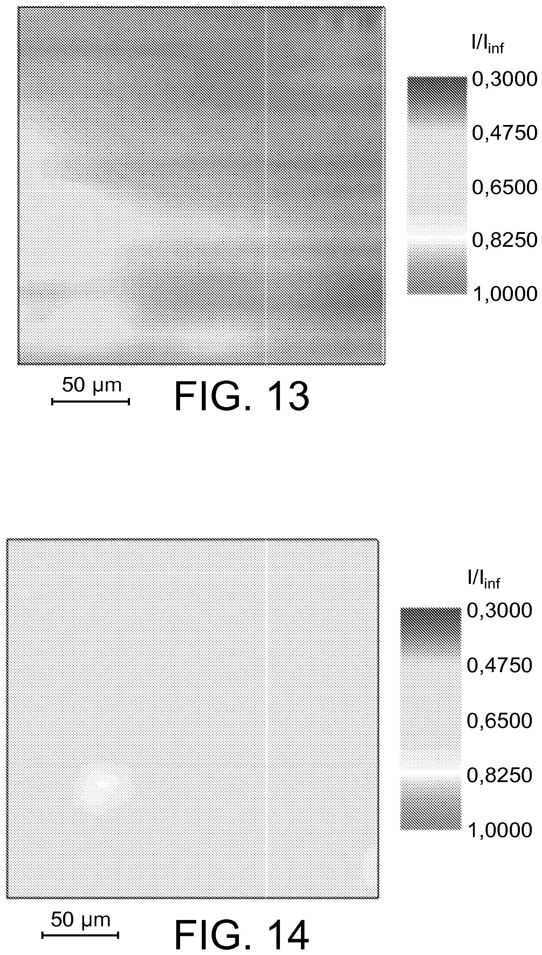

Les cartographies obtenues pour des échantillons de chacune des deux séries sont illustrées sur les figures 13 et 14, la figure 13 correspondant à un échantillon de la série 3 et la figure 14 correspondant à un échantillon de la série 4. En marge de droite de chacune de ces figures, est représentée une échelle des valeurs du courant normalisé I/I_{inf} mesuré à la sonde.

Ces cartographies montrent que l'échantillon de la série 4 présente une conductivité de surface uniformément plus élevée (avec I/I_{inf} ≃ 0,7) que celle de l'échantillon de la série 3, pouvant traduire une sensibilité plus accrue de la surface de cet échantillon à la corrosion. La cartographie de l'échantillon de la série 4 révèle de plus des zones plus conductrices potentiellement sensibles aux piqûres.

L'échantillon de la série 3 présente, lui, une conductivité de surface uniformément peu élevée (avec I/I_{inf} ≃ 0,4) qui témoigne de la qualité de passivation de la couche anticorrosion de cet échantillon.

Ces cartographies obtenues permettent de prédire que les résultats d'essais au brouillard salin seront différents pour les deux séries d'alliages et que l'alliage de la série 3 présentera une résistance à la corrosion plus élevée et assurément de haute qualité tandis que l'alliage de la série 4 présentera une résistance à la corrosion moindre (cette résistance à la corrosion devant cependant être meilleure que celle d'un alliage d'Al2024 non traité pour lequel des valeurs de I/I_{inf} de l'ordre de 1 ont été obtenues - cf. exemples 1 et 2).

Par conséquent, les prédictions sont les suivantes :
- alliage de la série 3 → conforme au brouillard salin ;
- alliage de la série 4 → non conforme au brouillard salin.

### 3.5 Essais au brouillard salin

Des échantillons des séries 3 et 4 sont soumis à des essais au brouillard salin de 168 heures dans les mêmes conditions opératoires que celles décrites dans l'exemple 1 ci-avant.

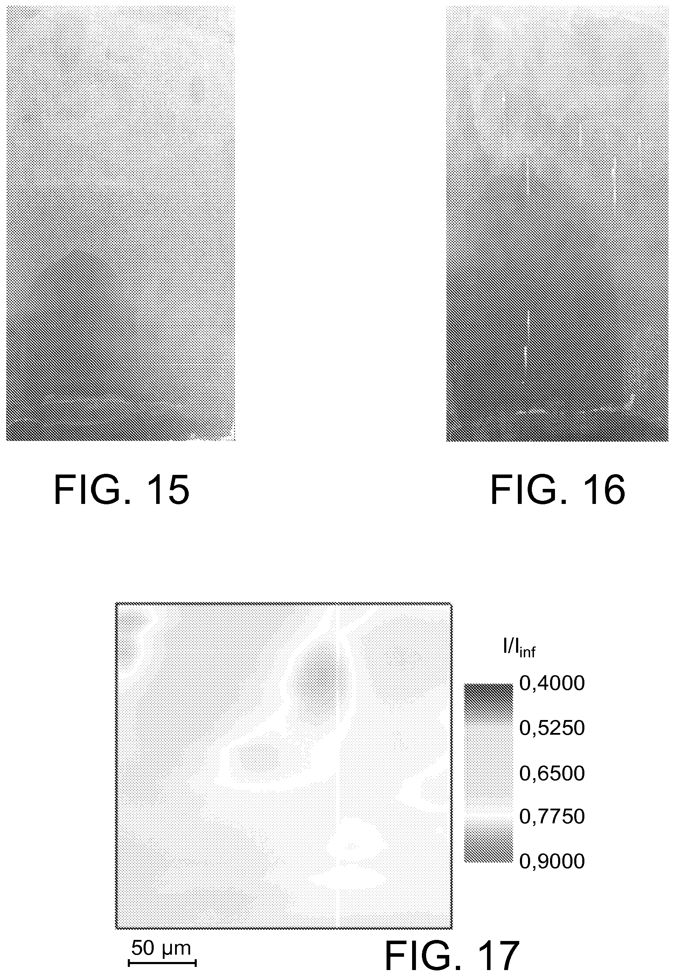

Les résultats de ces essais sont présentés dans le tableau II ci-après et sur les figures 15 et 16, la figure 15 correspondant à un échantillon de la série 3 et la figure 16 correspondant à un échantillon de la série 4.

**Tableau Il**

| **Échantillons** | **Nombre de piqûres/dm²** | **Résultats** |
|---|---|---|
| Al2024 de la série 3 | < 2 | conforme |
| Al2024 de la série 4 | ~ 10 | non conforme |

Ce tableau et ces figures confirment les prédictions formulées ci-avant et, par là même, que les diagnostics de résistance à la corrosion effectués par SECM sont extrêmement fiables.

### EXEMPLE 4 : Prédictions par analyse SECM par statistiques

Une analyse SECM par statistiques est réalisée sur un échantillon d'un alliage d'aluminium Al2024, préalablement traité anticorrosion par conversion au chrome trivalent.

Les conditions opératoires utilisées sont identiques à celles décrites dans l'exemple 1 à ceci près qu'il n'y a pas de balayage de la surface de l'échantillon par la sonde mais un positionnement de la sonde en différents points situés à l'aplomb de la surface de l'échantillon, la pointe de la sonde se trouvant à 10 µm de ladite surface à chaque point de positionnement. Les points sont sélectionnés aléatoirement par un programme informatique développé à cet effet.

À titre de comparaison, une analyse SECM par cartographie est également réalisée sur le même échantillon.

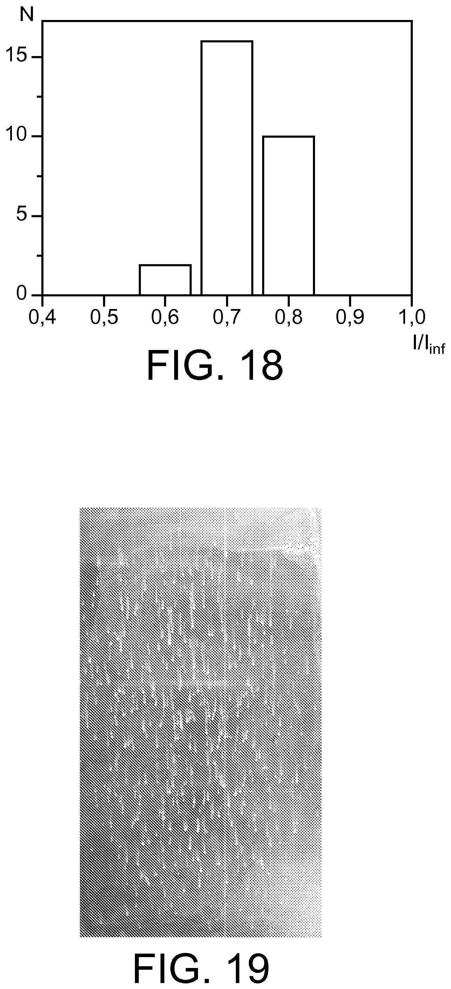

Des résultats de ces deux analyses sont présentés sur les figures 17 et 18, la figure 17 correspondant à la cartographie obtenue par l'analyse en mode cartographie et la figure 18 correspondant au classement des valeurs du courant normalisé I/I_{inf} mesuré à la sonde lors de l'analyse en mode statistiques.

Ces figures mettent en évidence l'existence d'une concordance entre les résultats obtenus par cartographie et ceux obtenus par statistiques qui montrent, les uns comme les autres, que la conductivité de surface de l'échantillon est globalement élevée, avec des valeurs I/I_{inf} entre 0,7 et 0,8, ce qui permet de prédire que cet échantillon sera jugé non conforme à l'issue d'un essai au brouillard salin.

L'échantillon est donc soumis à un essai au brouillard salin de 168 heures dans les mêmes conditions opératoires que celles décrites dans l'exemple 1 ci-avant.

Les résultats de cet essai sont illustrés sur la figure 19 qui montre un nombre important de piqûres (> 50/dm²), confirmant la non-conformité de l'échantillon et, par là même, la valeur prédictive de l'analyse SECM par statistiques.

### Références citées

**[1]** Jiang Mei-Yan et al., Corrosion Science 2015, 92, 118-126
**[2]** Junsheng Wu et al., Materials 10(4), 2017, 426
**[3]** Dongdong Peng et al., Journal of Coatings Technology and Research 2016, 13, 837-850
**[4]** Yi Xiao et al., Arabian Journal for Science and Engineering 2018, 43(7), 3577-3584
**[5]** Peng Guangchun et al., Progress in Organic Coatings 2020, 140, 1-10
**[6]** WO-A-2020/012097

## Revendications

1. Utilisation de la microscopie électrochimique à balayage pour prédire les résultats de résistance à la corrosion qui seraient obtenus pour une surface S1 (11) ayant subi un traitement anticorrosion si la surface S1 était soumise à un essai de corrosion au brouillard salin, ladite utilisation comprenant une analyse de la surface S1 par microscopie électrochimique à balayage, ledit analyse comportant les actions suivantes :
i) mesurer, dans des conditions opératoires préalablement choisies, un courant en n1 points différents de la surface S1 au moyen d'une sonde (12) de microscopie électrochimique à balayage pour obtenir n1 valeurs de courant, n1 étant un nombre entier au moins égal à 5 ;
ii) déterminer le pourcentage des n1 valeurs de courant obtenues à l'étape i) qui sont supérieures ou égales à un seuil de détection D, toute valeur de courant supérieure ou égale à D étant considérée comme correspondant à un point de la surface S1 susceptible d'être corrodé dans l'essai au brouillard salin ; et
iii) déterminer, à partir du pourcentage obtenu à l'étape ii), le nombre N de points de corrosion/unité de surface susceptible d'être présenté par la surface S1 si elle était soumise à l'essai au brouillard salin et comparer le nombre de points de corrosion/unité de surface ainsi obtenu avec le nombre maximal Nmax de points de corrosion/unité de surface que devrait présenter la surface S1 pour passer avec succès l'essai au brouillard salin ; moyennant quoi :
• si N est inférieur à Nmax, alors il est possible de prédire que la surface S1 passera effectivement avec succès cet essai ; tandis que
• si N est supérieur à Nmax, alors il est possible de prédire que cette surface ne passera pas avec succès cet essai. .

2. Utilisation selon la revendication 1, dans laquelle dans laquelle l'analyse de la surface S1 (11) est réalisée en mode feedback.

3. Utilisation selon la revendication 2, dans laquelle l'analyse de la surface S1 comprend un balayage de la surface S1 (11) avec la sonde (12) de microscopie électrochimique à balayage et dans laquelle une pointe de la sonde est maintenue à une distance d constante de la surface S1 durant le balayage de la surface.

4. Utilisation selon la revendication 3, dans laquelle la pointe de la sonde (12) suit, durant le balayage de la surface S1 (11), une trajectoire comprenant une ou plusieurs parties rectilignes.

5. Utilisation selon la revendication 4, dans laquelle la pointe de la sonde (12) suit, durant le balayage, une trajectoire comprenant plusieurs parties rectilignes parallèles entre elles.

6. Utilisation selon l'une quelconque des revendications 3 à 5, dans laquelle l'analyse de la surface S1 (11) comprend au moins les étapes consistant à :
a) sélectionner un point situé à l'aplomb de la surface S1 ;
b) amener, au point sélectionné à l'étape a), la pointe de la sonde (12) à la distance *d* ; et
c) balayer la surface S1 avec la sonde à partir du point sélectionné à l'étape a) en maintenant la pointe de la sonde à la distance *d* et mesurer le courant à la sonde durant le balayage.

7. Utilisation selon la revendication 2, dans laquelle l'analyse de la surface S1 (11) comprend un positionnement d'une sonde (12) de microscopie électrochimique à balayage en plusieurs points à l'aplomb de la surface S1 pour obtenir lesdits n1 valeurs de courant et dans laquelle une pointe de la sonde se situe à une distance d constante de la surface S1 à chaque point de positionnement.

8. Utilisation selon la revendication 7, dans laquelle les points de positionnement sont sélectionnés aléatoirement.

9. Utilisation selon la revendication 7 ou la revendication 8, dans laquelle l'analyse de la surface S1 (11) comprend au moins les étapes consistant à :
a) sélectionner les points de positionnement de la sonde (12) ; et
b) amener, pour chaque point de positionnement, la pointe de la sonde à la distance d et mesurer le courant à la sonde à chaque point de positionnement.

10. Utilisation selon l'une quelconque des revendications 1 à 9, dans laquelle un électrolyte (15) comprenant un médiateur redox à l'état réduit est utilisé.

11. Utilisation selon la revendication 10, dans laquelle le médiateur redox est le ferrocyanure, le ferrocène, le décaméthylferrocène ou le ferrocène diméthanol.

## Patentansprüche

1. Verwendung der elektrochemischen Rastermikroskopie zur Vorhersage der Korrosionsbeständigkeitsergebnisse, die für eine Oberfläche S1 (11), die einer Korrosionsschutzbehandlung unterzogen wurde, erzielt würden, wenn die Oberfläche S1 einem Salznebelkorrosionstest unterzogen würde, wobei die Verwendung eine Analyse der Oberfläche S1 mittels elektrochemischer Rastermikroskopie umfasst, wobei die Analyse die folgenden Aktionen umfasst:
i) unter vorher gewählten Betriebsbedingungen, Messen eines Stroms an n1 verschiedenen Punkten der Oberfläche S1 mittels einer Sonde (12) für die elektrochemische Rastermikroskopie, um n1 Stromwerte zu erhalten, wobei n1 eine ganze Zahl von mindestens 5 ist;
ii) Bestimmen des Prozentsatzes der in Schritt i) erhaltenen n1 Stromwerte, die größer oder gleich einem Nachweisschwellenwert D sind, wobei jeder Stromwert größer oder gleich D als einem Punkt der Oberfläche S1 entsprechend angesehen wird, der in dem Salznebeltest korrodieren kann; und
iii) Bestimmen, anhand des in Schritt ii) erhaltenen Prozentsatzes, der Anzahl N von Korrosionspunkten/Oberflächeneinheit, die die Oberfläche S1 aufweisen könnte, wenn sie dem Salznebeltest unterzogen würde, und Vergleichen der so erhaltenen Anzahl von Korrosionspunkten/Oberflächeneinheit mit der maximalen Anzahl Nmax von Korrosionspunkten/Oberflächeneinheit, die die Oberfläche S1 aufweisen sollte, um den Salznebeltest erfolgreich zu bestehen; wobei:
• wenn N kleiner als Nmax ist, dann vorhergesagt werden kann, dass die Oberfläche S1 diesen Test tatsächlich erfolgreich bestehen wird; während
• wenn N größer als Nmax ist, dann vorhergesagt werden kann, dass diese Oberfläche diesen Test nicht bestanden wird.

2. Verwendung nach Anspruch 1, wobei die Analyse der Oberfläche S1 (11) in dem Feedback-Modus durchgeführt wird.

3. Verwendung nach Anspruch 2, wobei die Analyse der Oberfläche S1 eine Abtastung der Oberfläche S1 (11) mit der Sonde (12) für die elektrochemische Rastermikroskopie umfasst und wobei eine Spitze der Sonde während der Abtastung der Oberfläche auf einem konstanten Abstand d von der Oberfläche S1 gehalten wird.

4. Verwendung nach Anspruch 3, wobei die Spitze der Sonde (12) während der Abtastung der Oberfläche S1 (11) einer Bahn folgt, die einen oder mehrere geradlinige Abschnitte umfasst.

5. Verwendung nach Anspruch 4, wobei die Spitze der Sonde (12) während der Abtastung einer Bahn folgt, die mehrere zueinander parallele geradlinige Abschnitte umfasst.

6. Verwendung nach einem der Ansprüche 3 bis 5, wobei die Analyse der Oberfläche S1 (11) mindestens die Schritte umfasst, die aus Folgendem bestehen:
a) Auswählen eines Punkts, der senkrecht zu der Oberfläche S1 liegt;
b) Bringen der Spitze der Sonde (12) an dem in Schritt a) ausgewählten Punkt auf den Abstand d; und
c) Abtasten der Oberfläche S1 mit der Sonde von dem in Schritt a) ausgewählten Punkt aus, während die Spitze der Sonde auf dem Abstand *d* gehalten wird, und Messen des Stroms an der Sonde während der Abtastung.

7. Verwendung nach Anspruch 2, wobei die Analyse der Oberfläche S1 (11) das Positionieren einer Sonde (12) für die elektrochemische Rastermikroskopie an mehreren Punkten senkrecht zu der Oberfläche S1 umfasst, um die n1 Stromwerte zu erhalten, und wobei sich eine Spitze der Sonde an jedem Positionierungspunkt auf einem konstanten Abstand d von der Oberfläche S1 befindet.

8. Verwendung nach Anspruch 7, wobei die Positionierungspunkte zufällig ausgewählt werden.

9. Verwendung nach Anspruch 7 oder Anspruch 8, wobei die Analyse der Oberfläche S1 (11) mindestens die Schritte umfasst, die aus Folgendem bestehen:
a) Auswählen der Positionierungspunkte der Sonde (12); und
b) Bringen der Spitze der Sonde auf den Abstand d für jeden Positionierungspunkt und Messen des Stroms an der Sonde an jedem Positionierungspunkt.

10. Verwendung nach einem der Ansprüche 1 bis 9, wobei ein Elektrolyt (15) verwendet wird, der einen Redox-Mediator im reduzierten Zustand umfasst.

11. Verwendung nach Anspruch 10, wobei der Redox-Mediator Ferrocyanid, Ferrocen, Decamethylferrocen oder Ferrocendimethanol ist.

## Claims

1. Use of the scanning electrochemical microscopy to predict the corrosion resistance results which would be obtained for a surface S1 (11) having undergone an anticorrosion treatment if the surface S1 was subjected to a salt fog corrosion test, said use comprising an analysis of the surface S1 by scanning electrochemical microscopy, wherein the analysis includes the following actions:
i) measuring, under previously selected operating conditions, a current at n₁ different points of the surface S1 by means of a scanning electrochemical microscopy probe (12) to obtain n₁ current values, n₁ being an integer which is at least equal to 5;
ii) determining the percentage of the n1 current values obtained in step i) which are greater than or equal to a detection threshold D, any current value which is greater than or equal to D being considered as corresponding to a point on the surface S1 likely to be corroded in the salt fog test; and
iii) determining, from the percentage obtained in step ii), the number N of corrosion points/unit area likely to be presented by the surface S1 if it was subjected to the salt fog test and comparing the number of corrosion points/unit area thus obtained with the maximum number Nmax of corrosion points/unit area that the surface S1 should have to successfully pass the salt fog test; whereby:
if N is less than Nmax, then it is possible to predict that the surface S1 will effectively successfully pass this test; while
if N is greater than Nmax, then it is possible to predict that this surface will not successfully pass this test.

2. Use according to claim 1, wherein the analysis of the surface S1 (11) is carried out in feedback mode.

3. Use according to claim 2, wherein the analysis of the surface S1 comprises a scanning of the surface S1 (11) with the scanning electrochemical microscopy probe (12) and wherein a tip of the probe is maintained at a constant distance *d* from the surface S1 during scanning the surface.

4. Use according to claim 3, wherein the tip of the probe (12) follows, during scanning the surface S1 (11), a trajectory comprising one or more rectilinear portions.

5. Use according to claim 4, wherein the tip of the probe (12) follows, during scanning, a trajectory comprising several rectilinear portions which are parallel to each other.

6. Use according to any one of claims 3 to 5, wherein the analysis of the surface S1 (11) comprises at least the steps consisting in:
a) selecting a point directly above the surface S1;
b) bringing, at the point selected in step a), the tip of the probe (12) to the distance *d*; and
c) scanning the surface S1 with the probe from the point selected in step a) by maintaining the tip of the probe (12) at the distance *d* and measuring the current at the probe during scanning.

7. Use according to claim 2, wherein the analysis of the surface S1 (11) comprises positioning a scanning electrochemical microscopy probe (12) at several points directly above the surface S1 and wherein a tip of the probe is located at a constant distance *d* from the surface S1 at each positioning point.

8. Use according to claim 7, wherein the positioning points are randomly selected.

9. Use according to claim 7 or claim 8, wherein the analysis of the surface S1 (11) comprises at least the steps consisting in:
a) selecting the probe (12) positioning points; and
b) bringing, for each positioning point, the tip of the probe to the distance d and measuring the current at the probe at each positioning point.

10. Use according to any one of claims 1 to 9, wherein an electrolyte (15) comprising a redox mediator in the reduced state is used.

11. Use according to claim 10, wherein the redox mediator is ferrocyanide, ferrocene, decamethylferrocene or ferrocene dimethanol.
